# EUROPEAN PATENT APPLICATION

(11) **EP 4 524 704 A1**
(43) Date of publication of application: **19.03.2025**
(21) Application number: 23915769.6
(22) Date of filing: 14.12.2023
(51) Int. Cl.: G06F 3/0483

(54) **INFORMATION DISPLAY METHOD AND APPARATUS, ELECTRONIC DEVICE, AND COMPUTER-READABLE MEDIUM**

(30) Priority: 10.01.2023 CN 202310035860
(71) Applicant: BEIJING YOUZHUJU NETWORK TECHNOLOGY CO. LTD., Beijing 101299 (CN)
(72) Inventor: CHEN, Zhongxiu, Beijing 100028 (CN)
(74) Representative: Williams, Michael David
(86) International application number: PCT/CN2023/138671
(87) International publication number: WO 2024/149014

(57) **Abstract**

The present application discloses an information display method and apparatus, an electronic device, and a computer-readable medium. The method comprises: after an object service triggering operation is received, displaying an object service page, wherein the object service page comprises a recommendation object display area and a service function display area, the recommendation object display area is used for displaying object recommendation information corresponding to some recommendation objects, and the service function display area is used for displaying service entries of a plurality of service functions; then after a triggering operation for object recommendation information corresponding to any recommendation object is detected, according to a material type corresponding to the object recommendation information, displaying a recommendation display page corresponding to the recommendation object, so that the recommendation display page can better introduce the recommendation object; or after a triggering operation for a service entry of any service function is detected, displaying a service page corresponding to the service function, so that the service page can better provide a corresponding service.

## Description

The present application is based on and claims the priority to the Chinese application No. 202310035860.8 filed on January 10, 2023, the disclosure of which is incorporated by reference herein in its entirety.

### TECHNICAL FIELD

The present application relates to the field of Internet technologies, and in particular, to an information presentation method and apparatus, an electronic device, and a computer-readable medium.

### BACKGROUND

For some clients (for example, clients with a video data presentation function), the clients may present some goods to a user by means of a page, so that the user can view these goods by means of the page.

However, how to present these goods to the user is a technical problem to be urgently solved.

### SUMMARY

In order to solve the above technical problem, the present application provides an information presentation method and apparatus, an electronic device, and a computer-readable medium.

In order to achieve the above purpose, the technical solutions provided in the present application are as follows:

The present application provides an information presentation method, comprising:
in response to an object service trigger operation, presenting an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions;
in response that a trigger operation for object recommendation information corresponding to a recommended object is detected, acquiring a material type corresponding to the object recommendation information, and presenting a recommendation presentation page corresponding to the recommended object according to the material type corresponding to the object recommendation information; and
in response that a trigger operation for a service entry corresponding to a service function is detected, presenting a service page corresponding to the service function.

In a possible implementation, the method further comprises:
in response to a first swipe operation triggered for the recommended-object presentation region, presenting a recommendation presentation page corresponding to a target object in the at least one recommended object.

In a possible implementation, the method further comprises:
in response to a second swipe operation triggered for the service function presentation region, increasing a presentation area of the service function presentation region, and hiding the recommended-object presentation region; or the method further comprises:
in response to a second swipe operation triggered for the service function presentation region, increasing a presentation area of the service function presentation region; and
in response that it is determined that the presentation area of the service function presentation region is increased to a first area threshold, hiding the recommended-object presentation region.

In a possible implementation, the method further comprises:
in response that it is determined that the presentation area of the service function presentation region is increased to a second area threshold, canceling presenting service entries to several target functions within the service function presentation region, and adding an entry management identification, wherein the several target functions are at least one of the plurality of service functions; and
in response to a trigger operation for the entry management identification, presenting an entry aggregation page, the entry aggregation page comprising the service entries to the several target functions.
In a possible implementation, the service function presentation region comprises a search service presentation region and a function identification aggregation region, the function identification aggregation region being adjacent to the search service presentation region, the search service presentation region being used for presenting a search service component, and the function identification aggregation region comprising the entry management identification; and the service function presentation region further comprises an object aggregation section, a presentation position of the object aggregation section being lower than that of the search service presentation region, and the presentation position of the object aggregation section being adjacent to that of the search service presentation region; and/or
the plurality of service functions comprise an object ordering service function, the object ordering service function not belonging to the several target functions, and a presentation position of a service entry to the object ordering service function being located within the function identification aggregation region.

In a possible implementation, the service function presentation region further comprises a search service component;
after the presenting an object service page, the method further comprises:
in response to a search request triggered by using the search service component, presenting a search result corresponding to a search character string in the search request within the service function presentation region; or
after the presenting an object service page, the method further comprises:
   in response to a search request triggered by using the search service component, switching from the object service page to a search result presentation page corresponding to a search character string in the search request, the search result presentation page being used for presenting a search result corresponding to the search character string; or
   after the presenting an object service page, the method further comprises:
      in response to a trigger operation for the search service component, switching from the object service page to a search service page, the search service page comprising a search service component; and
      in response to a search request triggered by using the search service component in the search service page, switching from the search service page to a search result presentation page corresponding to a search character string in the search request, the search result presentation page being used for presenting a search result corresponding to the search character string.

In a possible implementation, the object service page is thereon presented with a page switching region, wherein the page switching region comprises several page tags, each page tag corresponding to a different candidate page;
wherein in response to an object service trigger operation, presenting an object service page, comprises:
in response that the object service trigger operation is a selection operation for a page tag corresponding to the object service page, using the page tag corresponding to the object service page as a currently selected page tag, and presenting the object service page; and
after the presenting an object service page, the method further comprises:
   in response to a third swipe operation triggered for the service function presentation region, determining a new currently selected page tag based on the third swipe operation, and switching the object service page to a candidate page corresponding to the new currently selected page tag.

In a possible implementation, the recommended-object presentation region comprises object recommendation information corresponding to at least two recommended objects,
the object recommendation information corresponding to the at least two recommended objects in the recommended-object presentation region being presented in carousel presentation; and/or
after the presenting an object service page, the method further comprises:
   in response to a fourth swipe operation triggered for the recommended-object presentation region, switching presentation of the object recommendation information corresponding to the recommended object within the recommended-object presentation region.

In a possible implementation, the material type is a detail information type, a video information stream type or an object aggregation page type,
wherein, in response that the material type corresponding to the object recommendation information is the detail information type, the recommendation presentation page corresponding to the recommended object is an object detail page corresponding to the recommended object;
in response that the material type corresponding to the object recommendation information is the video information stream type, the recommendation presentation page corresponding to the recommended object is a video presentation page corresponding to the recommended object; and
in response that the material type corresponding to the object recommendation information is the object aggregation page type, the recommendation presentation page corresponding to the recommended object is an object aggregation page corresponding to the recommended object.

The present application provides an information presentation apparatus, comprising:
a first presentation unit configured to, in response to an object service trigger operation, present an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions;
a second presentation unit configured to, in response that a trigger operation for object recommendation information corresponding to a recommended object is detected, acquire a material type corresponding to the object recommendation information, and present a recommendation presentation page corresponding to the recommended object according to the material type corresponding to the object recommendation information; and
a third presentation unit configured to, in response that a trigger operation for a service entry to a service function is detected, present a service page corresponding to the service function.

The present application provides an electronic device, comprising: a processor and a memory,
the memory being configured to store instructions or a computer program; and
the processor being configured to execute the instructions or computer program in the memory, so that the electronic device performs the information presentation method according to the present application.

The present application provides a computer-readable medium having therein stored instructions or a computer program which, when running on a device, causes the device to perform the information presentation method according to the present application.

The present application provides a computer program product, comprising a computer program carried on a non-transitory computer-readable medium, the computer program containing program code for performing the information presentation method according to the present application.

Compared with the prior art, the present application has at least the following advantages:
in the technical solution provided by the present application, for a client, after the client receives an object service trigger operation, an object service page is presented, and the object service page comprises a recommended-object presentation region and a service function presentation region, so that the recommended-object presentation region is used for presenting object recommendation information (for example, a goods card, a live video, etc.) corresponding to at least one recommended object, and the service function presentation region is used for presenting service entries to a plurality of service functions, so as to after a trigger operation for object recommendation information corresponding to any recommended object is detected, acquire a material type corresponding to the object recommendation information, and present a recommendation presentation page corresponding to the recommended object according to the material type corresponding to the object recommendation information, so that the recommendation presentation page can better introduce related information of the recommended object; or after a trigger operation for a service entry to any service function is detected, present a service page corresponding to the service function, so that the service page can better provide a corresponding service to a user.

It can be seen that, for the object service page comprising the recommended-object presentation region and the service function presentation region according to the present application, the recommended-object presentation region can be used for presenting object recommendation information corresponding to some recommended objects, so that the recommended-object presentation region can, to a user, directly introduce some objects in which he may be interested, and thus, the user can directly view the information by means of the recommended-object presentation region, which facilitates improving viewing experience of the user for these objects; and the service function presentation region can be used for presenting service entries to some service functions, so that the service function presentation region can directly provide these service functions to the user, which also facilitates improving use experience of the user for these service functions.

### BRIEF DESCRIPTION OF THE DRAWINGS

In order to more clearly illustrate embodiments of the present application or technical solutions in the prior art, the drawings to be used in the description of the embodiments or the prior art will be briefly described below, and it is obvious that the drawings in the following description are only some embodiments described in the present application, and for those skilled in the art, other drawings can be obtained according to these drawings without paying creative labor.
Fig. 1 is a flow diagram of an information presentation method according to an embodiment of the present application;
Fig. 2 is a schematic diagram of an object service page according to an embodiment of the present application;
Fig. 3 is a schematic diagram of an object service page according to an embodiment of the present application;
Fig. 4 is a schematic diagram of a presentation process of an object service page according to an embodiment of the present application;
Fig. 5 is a schematic diagram of an object detail page according to an embodiment of the present application;
Fig. 6 is a schematic diagram of a video presentation page corresponding to a live video according to an embodiment of the present application;
Fig. 7 is a schematic diagram of a video presentation page corresponding to a short video according to an embodiment of the present application;
Fig. 8 is a schematic diagram of an object aggregation page according to an embodiment of the present application;
Fig. 9 is a schematic diagram of a change process of a presentation area of a service function presentation region according to an embodiment of the present application;
Fig. 10 is a schematic diagram of a change process of a service function presentation region according to an embodiment of the present application;
Fig. 11 is a schematic diagram of full-screen presentation of a service function presentation region according to an embodiment of the present application;
Fig. 12 is a schematic diagram of a page switching process according to an embodiment of the present application;
Fig. 13 is a schematic structural diagram of an information presentation apparatus according to an embodiment of the present application;
Fig. 14 is a schematic structural diagram of an electronic device according to an embodiment of the present application.

### DETAILED DESCRIPTION

In order to make those skilled in the art better understand the solutions of the present application, the technical solutions in the embodiments of the present application will be clearly and completely described below in conjunction with the drawings in the embodiments of the present application, and it is obvious that the described embodiments are only some of the embodiments of the present application, rather than all of the embodiments. All other embodiments, which are obtained by one of ordinary skill in the art without making creative labor based on the embodiments in the present application, fall within the scope of protection of the present application.

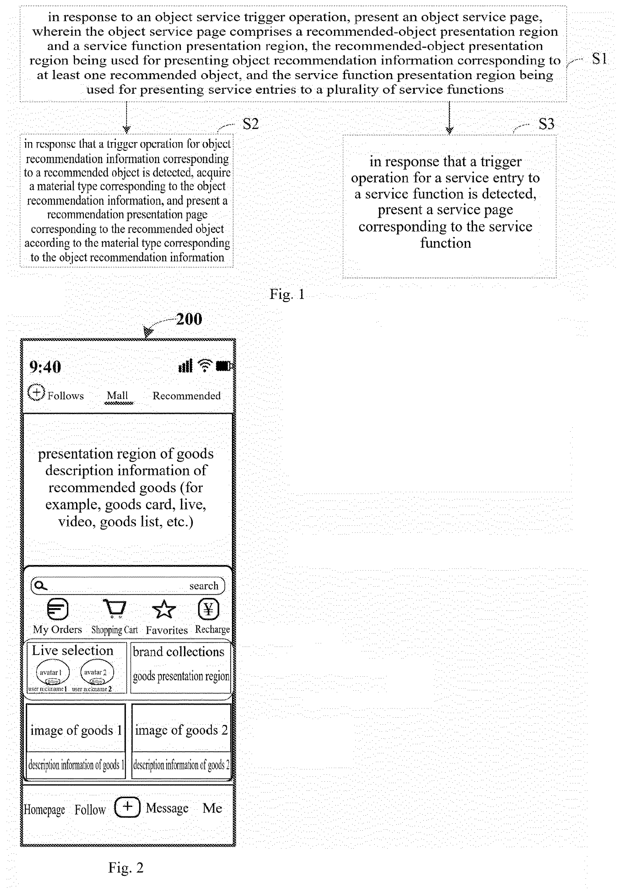

In order to better understand the technical solution provided in the present application, an information presentation method provided in the present application is first described below in conjunction with some drawings. As shown in Fig. 1, an information presentation method provided in an embodiment of the present application comprises the following steps S1-S3. Fig. 1 is a flow diagram of an information presentation method according to an embodiment of the present application.

S1: in response to an object service trigger operation, presenting an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions.

The object service page is used for aggregating and presenting some objects and some service functions (for example, service functions such as "My Orders", "Shopping Cart", and "Favorites" shown in Fig. 2) related to these objects (for example, goods shown in Fig. 2). The service function refers to a service (for example, an order viewing service, ordering information viewing service, favorite service, recharge service, etc.) provided by an object platform corresponding to the object service page to the user, so that the service function can assist the user in performing an operation (for example, an order information viewing operation, ordering information viewing operation, object favorite operation, resource value pre-storage operation, etc.) on some objects on the object platform. The object platform is used for providing some interactive objects for the user; and the present application does not limit the object platform, for example, it may be a mall platform.

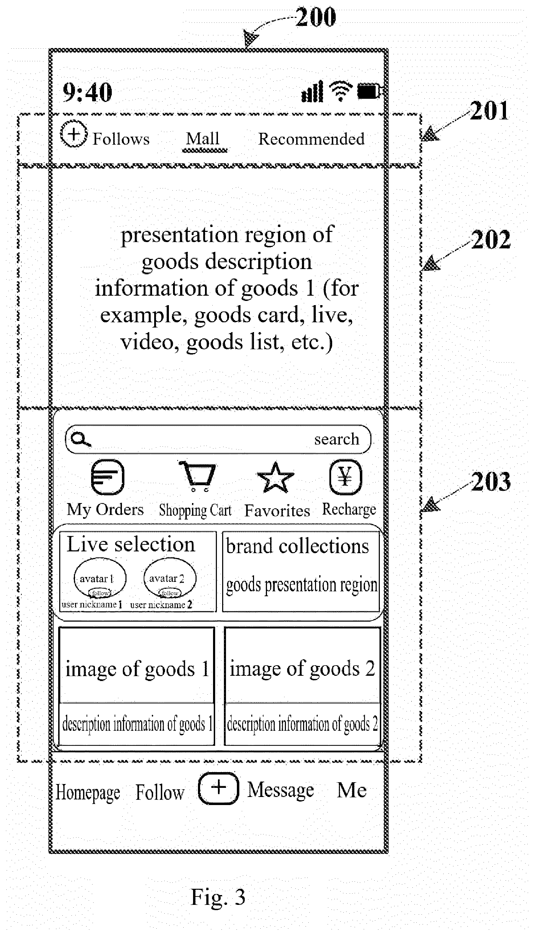

In addition, the present application does not limit an implementation of the above "object service page", for example, it may be implemented by using a mall homepage 200 shown in Fig. 2 or Fig. 3.

The above "object service trigger operation" is used for triggering a presentation process of the above object service page (for example, the mall homepage 200 shown in Fig. 2 or Fig. 3).

In addition, the present application does not limit an implementation of the above "object service trigger operation", for example, it can be implemented by using any existing or future operation capable of triggering the presentation process of the object service page. For ease of understanding, the description is made below in conjunction with some examples.

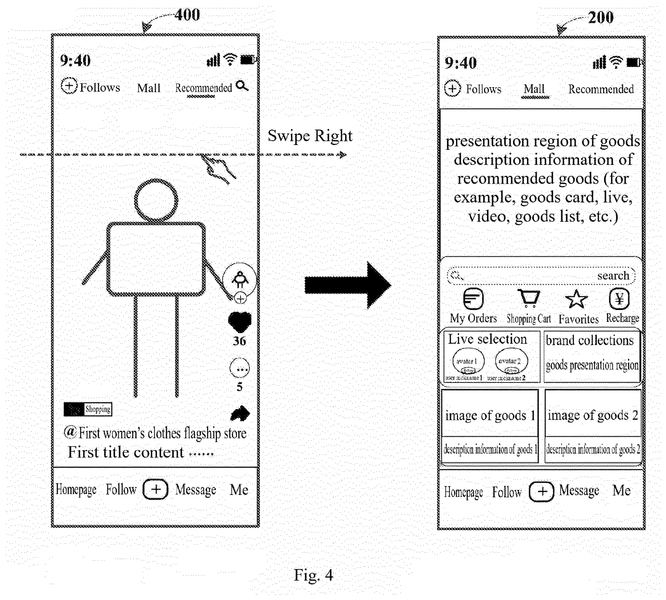

Example 1, in some application scenarios (for example, a short video presentation scenario shown in Fig. 4), a client may, to a user, provide pages corresponding to a plurality of page tags, so that the user may complete switching between different pages by a swipe operation. Based on this, as shown in Fig. 4, when the above object service page refers to a page corresponding to a "Mall" page tag and a page corresponding to a "Recommended" page tag is being presented on the client, the above "object service trigger operation" is used for swiping the page corresponding to the "Mall" page tag to a position where the page corresponding to the "Recommended" page tag is located (for example, a "Swipe Right" operation shown in Fig. 4).

Example 2, in some application scenarios (for example, a mall platform), when a certain page (for example, a goods detail page, a presentation page for short video data, etc.) being presented by a client is thereon deployed with an entry identification of a mall homepage, the above "object service trigger operation" may specifically be: a click operation triggered for the entry identification. The entry identification is used for uniquely identifying an entry to the mall homepage.

The above "recommended-object presentation region" is used for presenting object recommendation information corresponding to some recommended objects in a certain manner. Object recommendation information corresponding to an nth recommended object is used for introducing the nth recommended object; and the present application does not limit an implementation of the "object recommendation information corresponding to the nth recommended object", for example, it may be implemented by using a goods card, live video data, short video data, a goods list (for example, a goods list in a certain channel or a goods list in a certain cloud theme), or the like. n is a positive integer, and n≤N, N is a positive integer, and N represents the number of the objects in the above "at least one recommended object".

It should be noted that, the present application does not limit content related to the above "object recommendation information corresponding to the nth recommended object", for example, when a material type corresponding to the "object recommendation information corresponding to the nth recommended object" is a detail information type, the "object recommendation information corresponding to the nth recommended object" may be implemented by using a goods card, and the "object recommendation information corresponding to the nth recommended object" may include an image identification corresponding to the nth recommended object, title content (for example, a main title, a subtitle, etc.) of the nth recommended object, a recommendation reason for the nth recommended object, etc. For another example, when a material type corresponding to the "object recommendation information corresponding to the nth recommended object" is a video information stream type, the "object recommendation information corresponding to the nth recommended object" may be implemented by using a live video or short video, and the "object recommendation information corresponding to the nth recommended object" includes not only video data (for example, a live video or short video) corresponding to the nth recommended object, but also a sound playing control, so that the user can adjust a playing volume of the video data corresponding to the nth recommended object by means of the sound playing control. For another example, when a material type corresponding to the "object recommendation information corresponding to the nth recommended object" is an object aggregation page type, the "object recommendation information corresponding to the nth recommended object" may be implemented by using a goods list. It should be noted that, for related content of the material type, please refer to related content in S2 below.

In addition, the present application does not limit an implementation of the above "recommended-object presentation region", for example, it may be implemented by using a recommended-object presentation region 202 in Fig. 3.

In addition, the present application does not limit a presentation position where the above "recommended-object presentation region" is located in the above "object service page", for example, in a possible implementation, the "recommended-object presentation region" may occupy an upper half of the object service page for presentation, so that after the object service page is presented to the user, the user can quickly see the recommended-object presentation region, and thus, the user can view the recommended objects presented in the recommended-object presentation region as quickly as possible, thereby beneficially improving viewing experience of the user for these recommended objects.

Furthermore, the present application does not limit a presentation manner of the above "object recommendation information corresponding to the at least one recommended object", for example, it may specifically be: presenting, within the above recommended-object presentation region, object recommendation information corresponding to these recommended objects in carousel presentation. It can be seen that, in a possible implementation, when there are two or more recommended objects in the "at least one recommended object", object recommendation information corresponding to these recommended objects is presented in carousel presentation.

For another example, in order to better meet user experience, the present application further provides another possible implementation of the presentation manner of the above "object recommendation information corresponding to the at least one recommended object", in which when the "object recommendation information corresponding to the at least one recommended object" is sequentially presented in a certain order within the above recommended-object presentation region, the presentation manner may specifically be: in response to a fourth swipe operation triggered for the recommended-object presentation region, within the recommended-object presentation region, switching presentation of object recommendation information corresponding to these recommended objects. The fourth swipe operation is used for swiping object recommendation information not presented to a position where object recommendation information being presented is located, for example, it may be swipe left or swipe right.

As can be seen, for the above "recommended-object presentation region", when the object recommendation information corresponding to the nth recommended object is being presented in the recommended-object presentation region, if it is detected that a swipe left operation (that is, an operation for swiping object recommendation information corresponding to an (n+1)th recommended object to a position where the "object recommendation information corresponding to the nth recommended object" is located) is triggered within the recommended-object presentation region, the "object recommendation information corresponding to the nth recommended object" being presented within the recommended-object presentation region is directly switched to the object recommendation information corresponding to the (n+1)th recommended object; however, if it is detected that a swipe right operation (that is, an operation for swiping object recommendation information corresponding to an (n-1)th recommended object to the position where the "object recommendation information corresponding to the nth recommended object" is located) is triggered within the recommended-object presentation region, the "object recommendation information corresponding to the nth recommended object" being presented within the recommended-object presentation region is directly switched to the object recommendation information corresponding to the (n-1)th recommended object. An arrangement position corresponding to "the object recommendation information corresponding to the (n-1)th recommended object" is forward than an arrangement position corresponding to the "object recommendation information corresponding to the nth recommended object; and the arrangement position corresponding to the "object recommendation information corresponding to the nth recommended object" is forward than an arrangement position corresponding to the "object recommendation information corresponding to the (n+1)th recommended object". n is a positive integer, n+1<N.

It should be noted that, for the previous paragraph, in some application scenarios, when n=1, if it is detected that a swipe right operation (that is, an operation for swiping the object recommendation information corresponding to an Nth recommended object to a position where "object recommendation information corresponding to a 1st recommended object" is located) is triggered within the above recommended-object presentation region, the object recommendation information corresponding to the 1st recommended object being presented within the recommended-object presentation region is directly switched to object recommendation information corresponding to the Nth recommended object (that is, object recommendation information in a rearmost arrangement position). In addition, when n=N, if it is detected that a swipe left operation (that is, an operation for swiping the object recommendation information corresponding to the 1st recommended object to a position where "object recommendation information corresponding to the Nth recommended object" is located) is triggered within the recommended-object presentation region, the "object recommendation information corresponding to the Nth recommended object" being presented within the recommended-object presentation region is directly switched to the object recommendation information corresponding to the 1st recommended object (that is, object recommendation information in a foremost arrangement position).

In fact, for the above "recommended-object presentation region", the recommended-object presentation region can not only be used for presenting object recommendation information corresponding to some recommended objects, but also respond to some interaction operations triggered by a user, and for ease of understanding, the description will be made below in conjunction with an example.

As an example, in some application scenarios, the above "recommended-object presentation region" has a function shown in the following step 12.

Step 12: in response to a first swipe operation triggered for the recommended-object presentation region, presenting a recommendation presentation page corresponding to a target object in the at least one recommended object.

The above "first swipe operation" is used for swiping the above recommended-object presentation region to the above "service function presentation region"; and the "first swipe operation" may be preset, for example, in some application scenarios, when the "recommended-object presentation region" refers to the upper half of the above object service page, and the "service function presentation region" refers to a lower half of the object service page, the first swipe operation may refer to a swipe down operation triggered within the recommended-object presentation region.

The target object may refer to any of the above "at least one recommended object". For example, in some application scenarios, when these recommended objects are presented sequentially in a certain order within the above "recommended-object presentation region", the target object may refer to a recommended object being in a presentation state within the recommended-object presentation region.

The above "recommendation presentation page corresponding to the target object" is used for presenting related information of the target object (for example, the above "object recommendation information corresponding to the target object") in a manner of full-screen presentation. It should be noted that, related content of the "recommendation presentation page corresponding to the target object" is similar to the related content of the "recommendation presentation page corresponding to the nth recommended object" below, and for the sake of brevity, it is not repeated here.

Based on the related content in the above step 12, for the above "recommended-object presentation region" (for example, the recommended-object presentation region 202 shown in Fig. 3), when the "object recommendation information corresponding to the nth recommended object" is being presented in the recommended-object presentation region, after a first swipe operation (for example, a swipe down operation) triggered for the recommended-object presentation region is received, according to a material type (for example, a detail information type, a video information stream type, an object aggregation page type, or the like) corresponding to the "object recommendation information corresponding to the nth recommended object", an information stream (for example, a goods card in-stream, a live video in-stream, a short video in-stream, or the like) corresponding to the nth recommended object under the material type is directly entered, so that the recommendation presentation page corresponding to the nth recommended object can be used as a top-ranked page in the information stream for full-screen presentation, and thus the recommendation presentation page can better present the related information of the nth recommended object to the user, and then the user can view a recommendation presentation page (for example, a presentation page for information such as a goods card, live video, short video or goods list) corresponding to another object than the nth recommended object, which can better meet the object viewing requirement of the user, thereby beneficially improving user experience. n is a positive integer, and n≤N.

It can be seen that, for the above "recommended-object presentation region" (for example, the recommended-object presentation region 202 shown in Fig. 3), when the "object recommendation information corresponding to the nth recommended object" is being presented in the recommended-object presentation region, the user may enter an information stream corresponding to the nth recommended object by means of a swipe down operation triggered within the recommended-object presentation region, so that a certain information stream can be directly entered by means of the recommended-object presentation region, beneficially improving user experience.

The above "service function presentation region" is used at least for presenting service entries to a plurality of service functions. A service entry to an mth service function is used for triggering a presentation process for a service page corresponding to the mth service function. The "service page corresponding to the mth service function" is used for providing the mth service function to the user. m is a positive integer, and m≤M, M is a positive integer, and M represents the number of the service functions in the above "plurality of service functions".

In addition, the present application does not limit an implementation of the above "service function presentation region", for example, the "service function presentation region" may be implemented by using a service function presentation region 203 shown in Fig. 3; and the service entries to the plurality of service functions related to the "service function presentation region" may include service identifications such as "My orders", "Shopping Cart", "Favorites", and "Recharge" shown in Fig. 3.

Based on the previous paragraph, in a possible implementation, the above "service function presentation region" includes not only the above "service entries to the plurality of service functions", but also a search service component (for example, a search box and a search button shown in the service function presentation region 203 in Fig. 3) and/or an object aggregation section (for example, a goods aggregation section such as "live selection" shown in the service function presentation region 203 in Fig. 3). The search service component is used for providing a search service for certain search words. The "object aggregation section" is used for aggregating and presenting several objects according to a form of the section; and the present application does not limit the number of the object aggregation section presented in the "service function presentation region", for example, it may be set based on an actual application scenario.

In addition, the present application does not limit a position where the above "service function presentation region" is located in the above object service page, for example, the "service function presentation region" may occupy the lower half of the object service page for presentation.

Based on the related content of the above S1, for a client, after the client receives an object service trigger operation (for example, a "Swipe Right" operation shown in Fig. 4), an object service page (for example, a page 200 shown in Fig. 4) is directly presented, and the object service page includes a recommended-object presentation region (for example, the recommended-object presentation region 202 shown in Fig. 3) and a service function presentation region (for example, the service function presentation region 203 shown in Fig. 3), wherein the recommended-object presentation region is used for presenting object recommendation information (for example, a goods card, a live video, etc.) corresponding to at least one recommended object, and the service function presentation region is used for presenting service entries to a plurality of service functions, so that the object service page can at least meet the recommended-object viewing requirement and the service function using requirement of the user, beneficially improving user experience.

S2: if a trigger operation for object recommendation information corresponding to a recommended object is detected, acquiring a material type corresponding to the object recommendation information, and presenting a recommendation presentation page corresponding to the recommended object according to the material type corresponding to the object recommendation information.

For ease of understanding of S2, the description is made below in conjunction with an example.

As an example, when the above "at least one recommended object" includes N recommended objects, S2 may specifically be: in response to a trigger operation for object recommendation information corresponding to an nth recommended object within the above recommended-object presentation region, acquiring a material type corresponding to the object recommendation information, and presenting a recommendation presentation page corresponding to the nth recommended object according to the material type corresponding to the object recommendation information. n is a positive integer and n≤N.

The above "material type corresponding to the object recommendation information" refers to a type attribution presented by the above "object recommendation information corresponding to the nth recommended object" in terms of a material; moreover, the present application does not limit the "material type corresponding to the object recommendation information", for example, it may be a detail information type (for example, a goods card in-stream type), a video information stream type (for example, a live video stream type or a short video stream type), or an object aggregate page type (for example, a goods list in-stream type). The detail information type refers to a data stream type that object introduction is performed by means of some static description information (for example, image, text, etc.); the video information stream type refers to a data stream type that object introduction is performed by means of some video data; and the object aggregation page type refers to a data stream type that object introduction is performed by means of certain object aggregation (for example, a list or the like).

In addition, the present application does not limit an acquisition manner of the above "material type corresponding to the object recommendation information", for example, it may be implemented by using any existing or future method by which a material type corresponding to one goods can be determined.

Furthermore, the present application does not limit an implementation of the above "trigger operation for the object recommendation information corresponding to the nth recommended object" in the above step 11, for example, it may be specifically a click operation.

The above "recommendation presentation page corresponding to the nth recommended object" is used for presenting the related information (for example, the "object recommendation information corresponding to the nth recommended object" and the like) of the nth recommended object in full-screen presentation.

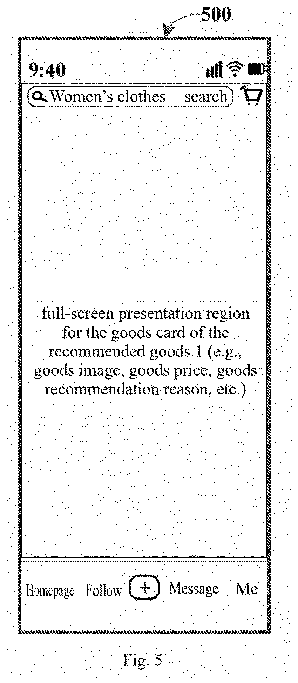

In addition, the present application does not limit an implementation of the above "recommendation presentation page corresponding to the nth recommended object", for example, it may be specifically implemented by using the following (1) to (3).
(1) If the above "material type corresponding to the object recommendation information" is the detail information type, the above "recommendation presentation page corresponding to the nth recommended object" may be an object detail page corresponding to the nth recommended object (for example, a goods card presentation page 500 shown in Fig. 5), so that the user can better know the related information of the nth recommended object from the object detail page, and the user can view a next object detail page corresponding to the object detail page by means of a swipe down operation triggered for the object detail page, which can directly enter an information stream (for example, a goods card in-stream, that is, it is possible to jump to a goods detail page, that is, the recommendation presentation page corresponding to the nth recommended object is the goods detail page) by means of the above "object recommendation information corresponding to the nth recommended object", thereby facilitating improving user experience. The "object detail page corresponding to the nth recommended object" is used for introducing the nth recommended object by means of some static description information (for example, image, text, etc.).

It should be noted that, the present application does not limit presentation content related to the "object detail page" in the previous paragraph, for example, the presentation content may be consistent with the content related to the above "object recommendation information corresponding to the nth recommended object". For another example, the presentation content of the "object detail page" includes at least the content related to the "object recommendation information corresponding to the nth recommended object". For still another example, there are some intersections between the presentation content of the "object detail page" and the content related to the "object recommendation information corresponding to the nth recommended object".

Based on the previous paragraph, in a possible implementation, when the above "object recommendation information corresponding to the nth recommended object" is a goods card, after a trigger operation for the "object recommendation information corresponding to the nth recommended object" is detected, it is determined that a material type corresponding to the "object recommendation information corresponding to the nth recommended object" is a detail information type, and according to the detail information type, it may be determined that the above "recommendation presentation page corresponding to the nth recommended object" is a goods detail page corresponding to the nth recommended object.

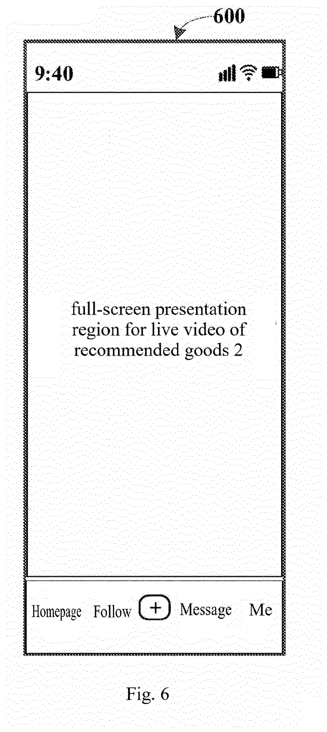

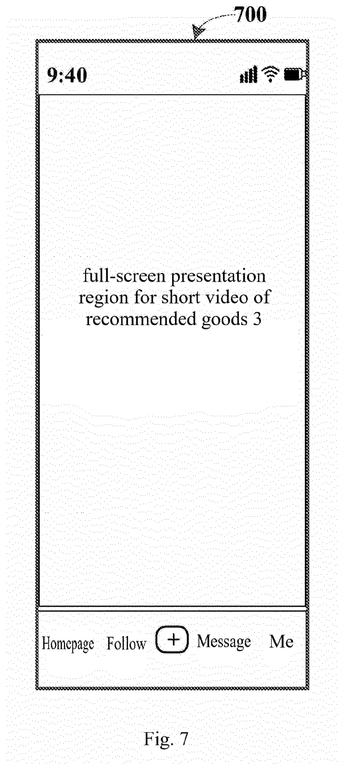

(2) If the above "material type corresponding to the object recommendation information" is the video information stream type (for example, a live video stream type, or a short video stream type, etc.), the above "recommendation presentation page corresponding to the nth recommended object" may be a video presentation page corresponding to the nth recommended object (for example, a live video presentation page 600 shown in Fig. 6 or a short video presentation page 700 shown in Fig. 7), so that the user can better know the related information of the nth recommended object from the video presentation page, and the user can also view a next video presentation page corresponding to the video presentation page by means of a swipe down operation triggered for the video presentation page, which can directly enter an information stream (for example, a live video in-stream or a short video in-stream, that is, it is possible to jump to a live room interface or a short video playing interface, that is, the recommendation presentation page corresponding to the nth recommended object is a live video playing interface or a short video playing interface) by means of the above "object recommendation information corresponding to the nth recommended object", thereby facilitating improving user experience. The "video presentation page corresponding to the nth recommended object" is used for introducing the nth recommended object by means of video data (for example a live video or short video, etc.).

It should be noted that, the present application does not limit presentation content related to the "video presentation page" in the previous paragraph, for example, the presentation content includes at least video data (for example, a live video or short video, etc.) related to the above "object recommendation information corresponding to the nth recommended object".

Based on the previous paragraph, in a possible implementation, when the above "object recommendation information corresponding to the nth recommended object" is a live video, after a trigger operation for the "object recommendation information corresponding to the nth recommended object" is detected, it is determined that a material type corresponding to the "object recommendation information corresponding to the nth recommended object" is a video information stream type (particularly, a live video stream type), and according to the video information stream type (particularly, the live video stream type), it may be determined that the above "recommendation presentation page corresponding to the nth recommended object" is a live room interface corresponding to the nth recommended object.

In another possible implementation, when the above "object recommendation information corresponding to the nth recommended object" is a short video, after a trigger operation for the "object recommendation information corresponding to the nth recommended object" is detected, it is determined that a material type corresponding to the "object recommendation information corresponding to the nth recommended object" is a video information stream type (particularly, a short video stream type), and according to the video information stream type (in particular, the short video stream type), it may be determined that the above "recommendation presentation page corresponding to the nth recommended object" is a short video playing interface corresponding to the nth recommended object.

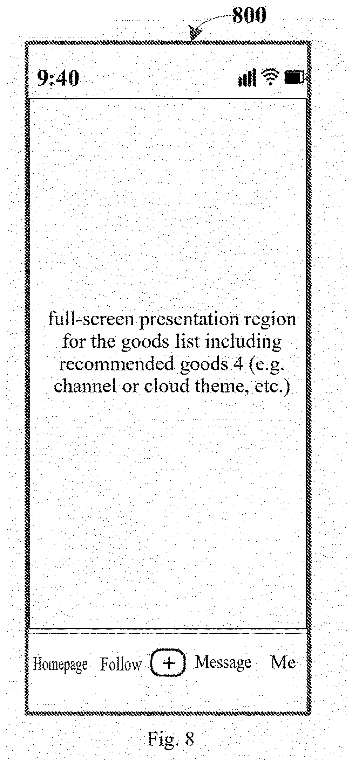

(3) If the above "material type corresponding to the object recommendation information" is the object aggregation page type (for example, a channel stream type or a cloud theme stream type, etc.), the above "recommendation presentation page corresponding to the nth recommended object" may be an object aggregation page corresponding to the nth recommended object (for example, a goods list presentation page under a certain channel, a goods list presentation page under a certain cloud theme, or a goods list presentation page 800 shown in Fig. 8, etc.), so that the user can better know the related information of the nth recommended object from the object aggregation page, and the user can also view a next object aggregation page corresponding to the object aggregation page by means of a swipe down operation triggered for the object aggregation page, which can directly enter an information stream (for example, for a channel stream type or cloud theme stream type, it is possible to jump to a channel page or cloud theme page, that is, the recommendation presentation page corresponding to the nth recommended object is a channel page or cloud theme page) by means of the above "object recommendation information corresponding to the nth recommended object", thereby facilitating improving user experience. The "object aggregation page corresponding to the nth recommended object" is used for introducing the nth recommended object by means of certain object aggregation (for example, a list, etc.).

It should be noted that, the present application does not limit presentation content related to the "object aggregation page" in the above paragraph, for example, the presentation content includes at least a goods list related to the above "object recommendation information corresponding to the nth recommended object".

Based on the above paragraph, in a possible implementation, when the above "object recommendation information corresponding to the nth recommended object" is a goods list, after a trigger operation for the "object recommendation information corresponding to the nth recommended object" is detected, it is determined that a material type corresponding to the "object recommendation information corresponding to the nth recommended object" is an object aggregation page type, and according to the object aggregation page type, it may be determined that the "recommendation presentation page corresponding to the nth recommended object" is a channel page or cloud theme page corresponding to the nth recommended object.

Based on the related content of the above S2, for the above "recommended-object presentation region" (for example, the recommended-object presentation region 202 shown in Fig. 3), when "object recommendation information corresponding to the nth recommended object" is being presented in the recommended-object presentation region, after a trigger operation (for example, a click operation) for the "object recommendation information corresponding to the nth recommended object" is received, according to a material type (for example, a detail information type, a video information stream type, or an object aggregation page type, etc.) corresponding to the "object recommendation information corresponding to the nth recommended object", an information stream (for example, a goods card in-stream, a live video in-stream, or a short video in-stream, etc.) corresponding to the nth recommended object under the material type is directly entered, so that the recommendation presentation page corresponding to the nth recommended object can be used as a top-ranked page in the information stream for full-screen presentation, and thus, the recommendation presentation page can better present the related information of the nth recommended object to the user, and then the user can view a recommendation presentation page (for example, a presentation page for information such as a goods card, live video, short video, or goods list) corresponding to another object than the nth recommended object, which can better meet the object viewing requirement of the user, thereby facilitating improving user experience. n is a positive integer, and n≤N.

S3: if a trigger operation for a service entry to a service function is detected, presenting a service page corresponding to the service function.

In the present application, for the above "service function presentation region", when service entries to M service functions are presented within the service function presentation region, if a trigger operation (for example, a click operation) for a service entry to an mth service function is detected, a service page corresponding to the mth service function is directly presented, so that the service page can provide the mth service function to the user. For the related content of the service page, please refer to the related content in the above S1, where m is a positive integer, m≤M, and M is a positive integer.

It should be noted that, the present application does not limit a presentation manner of the "service page corresponding to the mth service function" in the above paragraph, for example, it may be directly presented within the above service function presentation region. For another example, it may also be presented by means of a pull-down page. For another example, the presentation manner of the "service page corresponding to the mth service function" may be specifically: detecting a trigger operation for a service entry to a service function, and jumping from the above object service page to a service page corresponding to the mth service function.

It should also be noted that, the present application does not limit an implementation of the above "trigger operation for a service entry to a service function" in the above S3, for example, it may be a click operation.

It should further be noted that, the present application does not limit an execution time for the above S3, for example, the execution time for the S3 may be later than an execution time for the above S1.

Based on the related content of the above S1-S3, for the information presentation method provided in the embodiment of the present application, after a client receives an object service trigger operation, an object service page is presented, and the object service page comprises a recommended-object presentation region and a service function presentation region, so that the recommended-object presentation region is used for presenting object recommendation information (for example, a goods card, a live video, etc.) corresponding to at least one recommended object, and the service function presentation region is used for presenting service entries to a plurality of service functions, so as to after a trigger operation for object recommendation information corresponding to any recommended object is detected, a material type corresponding to the object recommendation information is acquired, and according to the material type corresponding to the object recommendation information, a recommendation presentation page corresponding to the recommended object is presented, so that the recommendation presentation page can better introduce related information of the recommended object; or after a trigger operation for a service entry to any service function is detected, a service page corresponding to the service function is presented, so that the service page can better provide a corresponding service to the user.

It can be seen that, for the object service page comprising the recommended-object presentation region and the service function presentation region, which is provided in the present application, the recommended-object presentation region can be used for presenting object recommendation information corresponding to some recommended objects, so that the recommended-object presentation region can, to a user, directly introduce some objects in which he may be interested, and thus, the user can directly view the information by means of the recommended-object presentation region, which facilitates improving viewing experience of the user for these objects; and the service function presentation region can be used for presenting service entries to some service functions, so that the service function presentation region can directly provide these service functions to the user, which facilitates improving use experience of the user for these service functions.

In addition, the embodiment of the present application does not limit an execution subject of the information presentation method provided in the embodiment of the present application, for example, the information presentation method provided in the embodiment of the present application may be applied to a terminal device. For another example, the information presentation method provided in the embodiment of the present application may also be implemented by means of a data interaction process between a terminal device and a server. The terminal device may be a smartphone, computer, personal digital assistant (PDA), tablet, etc. The server may be a stand-alone server, a cluster server, or a cloud server.

In fact, in order to better improve user experience, the present application further provides a possible implementation of the above "service function presentation region", in which the "service function presentation region" may respond to some swipe operations (for example, Swipe Up, Swipe Left, Swipe Right, etc.) triggered by the user. For ease of understanding, the description is made below in conjunction with certain cases.

Case 1, in some application scenarios, when presentation is performed by means of the lower half of the above object service page in the above "service function presentation region", after a swipe up operation is triggered within the "service function presentation region", a presentation area of the "service function presentation region" may be gradually increased with an increase in a swipe distance of the swipe up operation. For ease of understanding, the description is made below in conjunction with two examples.

Example 1, in a possible implementation, the above information presentation method may comprise at least the above S1 and the following step 21. An execution time for the step 21 is later than the execution time for the S1.

Step 21: in response to a second swipe operation triggered for the above service function presentation region, increasing a presentation area of the service function presentation region, and hiding the recommended-object presentation region.

The second swipe operation is used for swiping the above service function presentation region to the above "recommended-object presentation region"; moreover, the second swipe operation may be preset, for example, in some application scenarios, when the "recommended-object presentation region" refers to the upper half of the above object service page, and the "service function presentation region" refers to the lower half of the object service page, the second swipe operation may specifically be: a swipe up operation triggered within the above service function presentation region.

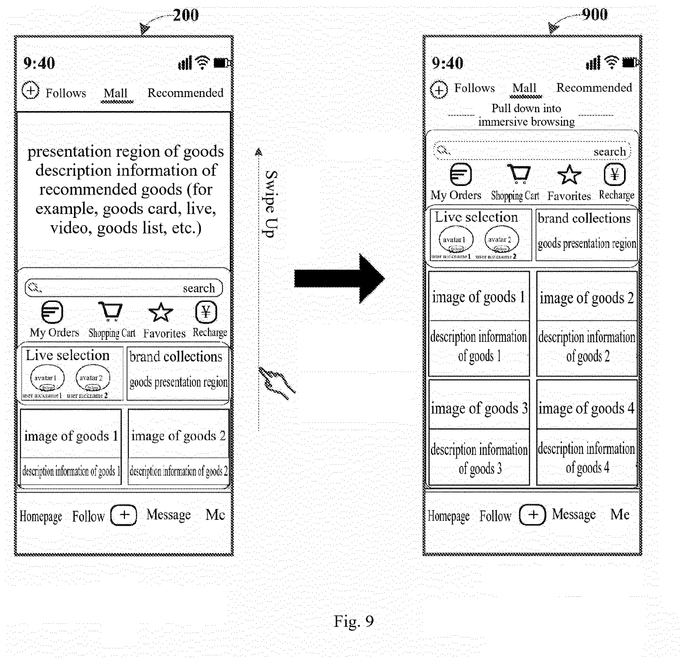

It should be noted that, the present application does not limit an implementation of "hiding the recommended-object presentation region" in the above step 21, for example, a hiding manner expressed by a character string "Pull down into immersive browsing" shown in a mall homepage 900 in Fig. 9 may be used, so that the user may subsequently resume presenting the recommended-object presentation region by performing a pull-down operation for the mall homepage 900.

Based on the related content in the above step 21, for the object service page (for example, the mall homepage 200 shown in Fig. 9) comprising the recommended-object presentation region and the service function presentation region, after a second swipe operation (i.e., an operation for swiping the service function presentation region to the recommended-object presentation region) triggered for the service function presentation region is received, the recommended-object presentation region is directly hidden and the presentation area of the service function presentation region is increased, so that an increase in the presentation area is in positive correlation with a swipe distance of the second swipe operation (i.e., the longer the swipe distance of the second swipe operation, the greater the increase in the presentation area), and thus, the service function presentation region can subsequently occupy most area of the object service page (for example, the mall homepage 900 shown in Fig. 9) for presentation, which facilitates better use of the related information presented in the service function presentation region by the user, thereby facilitating improving user experience.

Example 2, in another possible implementation, the above information presentation method may comprise at least the above S1 and the following steps 31-32. An execution time for the step 31 is later than the execution time for the S1.

Step 31: in response to a second swipe operation triggered for the service function presentation region, increasing a presentation area of the service function presentation region.

It should be noted that, the related content of the step 31 is similar to the related content of step 21, and for brevity, it is not repeated here.

Step 32: when it is determined that the presentation area of the service function presentation region is increased to a first area threshold, hiding the recommended-object presentation region. The first area threshold can be preset.

Based on the related content of the above steps 31 to 32, for the object service page (for example, the mall homepage 200 shown in Fig. 9) comprising the recommended-object presentation region and the service function presentation region, after a second swipe operation (i.e., an operation for swiping the service function presentation region to the recommended-object presentation region) triggered for the service function presentation region is received, the presentation area of the service function presentation region is increased, so that an increase in the presentation area is in positive correlation with a swipe distance of the second swipe operation (i.e., the longer the swipe distance of the second swipe operation, the greater the increase in the presentation area), so as to when it is determined that the presentation area of the service function presentation region is increased to a first area threshold, hide the recommended-object presentation region, so that the service function presentation region can subsequently occupy most area of the object service page (for example, the mall homepage 900 shown in Fig. 9) for presentation, which facilitates better use of the related information presented in the service function presentation region by the user, thereby facilitating improving user experience.

It should be noted that, for the above "object service page", since the object service page has a fixed page area, the presentation area of the above recommended-object presentation region is correspondingly decreased with the increase in the presentation area of the above service function presentation region, so that a sum of the "presentation area of the service function presentation region" and the "presentation area of the recommended-object presentation region" is always a preset area sum.

Based on the related content of the above two examples, in response to a swipe up operation triggered for the above "service function presentation region", the presentation area of the "service function presentation region" may be increased, and the increase in the presentation area may continually become greater with the swipe distance of the swipe up operation, so that the purpose of full-screen presenting the service function presentation region by means of the swipe up operation can be achieved.

In fact, in order to better improve the presentation effect of the full-screen presentation of the above "service function presentation region", the present application further provides a possible implementation of the above information presentation method, in which the information presentation method comprises at least the following steps 41 to 42. An execution time for the step 41 is later than the execution time for the step 21 or the execution time for the step 32.

Step 41: when it is determined that the presentation area of the above service function presentation region is increased to a second area threshold, canceling presenting service entries to several target functions within the service function presentation region, and adding an entry management identification, wherein the several target functions are at least one of the above plurality of service functions.

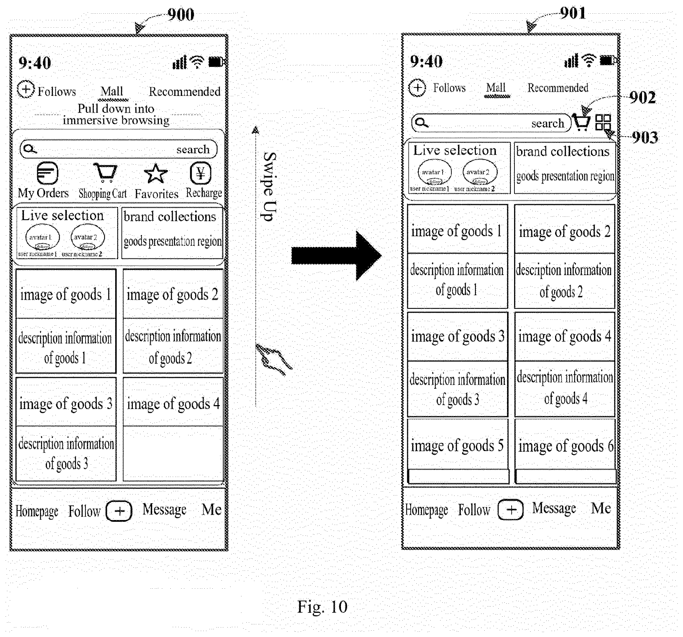

The second area threshold can be preset; for example, it may specifically be: the second area threshold exceeding a presentation area of a service function presentation region shown in a mall homepage 900 in Fig. 10.

In addition, the present application does not limit an association between the above "second area threshold" and the above "first area threshold", for example, in some application scenarios, the second area threshold is greater than the first area threshold.

The above "target function" is used for representing a service function (for example, a service function corresponding to the "My Orders" identification in Fig. 2) in the above "plurality of service functions" that can be hidden for presentation, so that the target function can be hidden for presentation, to save page space.

Furthermore, the present application does not limit an implementation of the above "several target functions", for example, in some application scenarios, when the above " plurality of service functions" include at least an object ordering service function (for example, a service function corresponding to the "Shopping Cart" identification in Fig. 2), the "several target functions" may include all other service functions than the object ordering service function in the " plurality of service functions". The "object ordering service function" is used for presenting ordering-related information of some ordered objects to the user; moreover, the present application does not limit the "object ordering service function", for example, it may refer to the service function corresponding to the "Shopping Cart" identification in Fig. 2. Based on this, in a possible implementation, the object ordering service function does not belong to the "several target functions", so that there is no need to hide a service entry to the object ordering service function for presentation in the subsequent process.

The above "entry management identification" is used for uniquely identifying an entry to the following entry aggregation page, so that the "entry management identification" is used for triggering a presentation process for the following entry aggregation page. The entry aggregation page is used for aggregating and presenting service entries to several candidate functions; and the present application does not limit an implementation of the entry aggregation page. The "several candidate functions" include at least the above "several target functions". The candidate function refers to a service function for presenting the service entry to the entry aggregation page the by means of the entry aggregation page.

In addition, the present application does not limit the implementation of the above "entry management identification", for example, it may be implemented by using a tool management control 903 shown in Fig. 10.

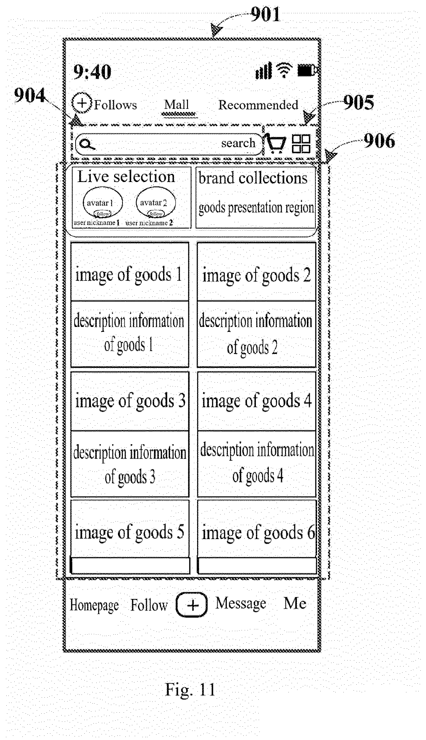

Furthermore, the present application does not limit a presentation position where the above "entry management identification" is located in the above service function presentation region, for example, when the service function presentation region comprises a search service presentation region (for example, a search service presentation region 904 shown in Fig. 11) and a function identification aggregation region (for example, a function identification aggregation region 905 shown in Fig. 11), and when the function identification aggregation region is adjacent to the search service presentation region (for example, the function identification aggregation region is horizontally adjacent to the search service presentation region), the presentation position of the entry management identification is located within the function identification aggregation region. The function identification aggregation region is used for aggregating and presenting identifications of the at least one service function (for example, a shopping cart control 902 and a tool management control 903 shown in Fig. 10); the search service presentation region is used for presenting a search service component; the search service component is used for providing a search service; moreover, the present application does not limit the search service component, for example, it may include a search word input box and a search trigger button.

Based on the above paragraph, in a possible implementation, when the above service function presentation region comprises a search service presentation region and a function identification aggregation region, and the function identification aggregation region is adjacent to the search service presentation region, the function identification aggregation region may include at least the entry management identification; and the search service presentation region may include a search service component, so that a user can quickly find a service function which he wants to use by means of the two regions, and thus his usage requirement for some service functions can be better met, which can save page space on the premise that the usage requirement of the user for the service functions is met as much as possible, and thus can better improve user experience.

In addition, for the service function presentation region in the above "object service page" (for example, the mall homepage 901 shown in Fig. 10), when the above "plurality of service functions" include at least the above "several target functions" and the above "object ordering service function", if the service function presentation region comprises the search service presentation region and the function identification aggregation region, a presentation position of a service entry (for example, the shopping cart control 902 shown in Fig. 10) of the object ordering service function is located within the function identification aggregation region.

Based on the above paragraph, in a possible implementation, when the above service function presentation region comprises a search service presentation region and a function identification aggregation region, and the function identification aggregation region is adjacent to the search service presentation region, the function identification aggregation region may include at least the above entry management identification (for example, the tool management control 903 shown in Fig. 10) and the service entry (for example, the shopping cart control 902 shown in Fig. 10) to the above object ordering service function, so that the user can use the above "plurality of service functions" by means of the function identification aggregation region, which facilitates improving the usage convenience of the user for these service functions.

In fact, for the above "plurality of service functions", service entries to some of these service functions are hidden for presentation, and service entries to other service functions are migrated to a side of the search service component, so that the space originally occupied by these service functions is in an idle state, and thus, in order to better enhance the use effect of the page space, the present application further provides a possible implementation of the above service function presentation region (for example, a service function presentation region shown in the mall homepage 901 in Fig. 10), in which when the service function presentation region further comprises an object aggregation section (for example, sections shown in the section presentation area 906 in Fig. 11), a presentation position of the object aggregation section (for example, a page position occupied by a section presentation area 906 in Fig. 11) is lower than that of the above search service presentation region (for example, a search service presentation region 904 shown in Fig. 11), and the presentation position of the object aggregation section is adjacent to that of the search service presentation region (for example, the presentation position of the object aggregation section is vertically adjacent to that of the search service presentation region).

Based on the related content of the above step 41, for the above "service function presentation region" (for example, the service function presentation region shown in the mall homepage 900 in Fig. 10), when the service function presentation region includes the search service component, the service entries to the plurality of service functions, and the object aggregation section, after a second swipe operation triggered for the service function presentation region is received, a presentation area of the service function presentation region is correspondingly increased with an increase in a swipe distance of the second swipe operation, until when it is determined that the presentation area of the service function presentation region is increased to a second area threshold, the search service component is, within the service function presentation region, directly moved to a first top position (for example a position shown by the search service presentation region 904 in Fig. 11), presenting service entries to several target functions in these service functions is cancelled, and a service entry to an object ordering service function in these service functions is moved to a second top position (for example, a position where the shopping cart control 902 in Fig. 10 is located), so that a presentation position of the "service entry to the object ordering service function" after the position movement is horizontally adjacent to the presentation position of the search service component, and an entry management identification is added at a third top position (for example, a position where the tool management control 903 in Fig. 10 is located), so that the presentation position of the entry management identification is horizontally adjacent to that of the "service entry to the object ordering service function", which can aggregate all the service functions on the same horizontal line, thereby facilitating use of these service functions by the user. The first top position, the second top position and the third top position are located on the same horizontal line; and the first top position, the second top position and the third top position can all be preset.

Step 42: in response to a trigger operation for the entry management identification, presenting an entry aggregation page, the entry aggregation page comprising the service entries to the several target functions.

In the present application, for the above "object service page" (for example, the page 901 shown in Fig. 10), when the object service page is thereon presented with the entry management identification (for example, the tool management control 903 shown in Fig. 10), after a trigger operation (for example, a click operation) for the entry management identification is received, an entry aggregation page corresponding to the entry management identification may be presented, and the entry aggregation page is at least thereon presented with the service entries to the above several target functions, which hide service entries to some service functions for presentation by means of the entry aggregation page, thereby facilitating saving the page space as much as possible while meeting usage requirements of the user for these service functions.

It should be noted that, the present application does not limit an implementation of the "trigger operation for the above entry management identification" in the above step 42, for example, it may be a click operation.

Based on the related contents of the above steps 41 to 42, for the above "service function presentation region", when the service function presentation region includes the search service component, the service entries to the plurality of service functions, and the object aggregation section, after a second swipe operation triggered for the service function presentation region is received, the presentation area of the service function presentation region is correspondingly increased with an increase in a swipe distance of the second swipe operation, until when it is determined that the presentation area of the service function presentation region is increased to the second area threshold, the presentation position of the above search service component is adjusted, replacing the service entries to the above several target functions with the entry management identification, and the presentation position of the above "service entry to the object ordering service function" is adjusted, so that the search service component after the position adjustment, the "service entry to the object ordering service function" after the position adjustment, and the newly added entry management identification are located on the same horizontal line (as shown in the page 901 in Fig. 10), which can aggregate the plurality of service functions on the same horizontal line, and thus, can better improve the usage convenience of the service functions by the user.

Case two: in some application scenarios, there is a search service component in the above "service function presentation region", so that the service function presentation region can be used for meeting the search requirement of the user. For ease of understanding, the description is made below in conjunction with some examples.

Example 1: in a possible implementation, when the above "service function presentation region" comprises a search service component, the above information presentation method may include at least the above S1 and the following 51. An execution time for the step 51 is later than the execution time for the S1.

Step 51: after the above object service page is presented, in response to a search request triggered by using the above search service component, presenting, within the above service function presentation region, a search result corresponding to a search character string in the search request.

The search request refers to a request triggered by means of the above search service component, so that the search request is used for performing search query processing for the search character string carried by the search request. The search character string refers to a character string inputted by using a search word input box in the search service component.

In addition, the present application does not limit a triggering manner of the above "search request", for example, when the above search service component includes a search word input box and a search triggering button, the triggering manner of the "search request" may specifically be: when there is one search character string in the search word input box, after a click operation triggered for the search triggering button is received, triggering the search request, so that the search request has the search character string carried therein.

The above "search result" refers to information obtained by performing search query processing for the above search character string.

Based on the related content of the above step 51, for the above "service function presentation region" (for example, the service function presentation region 203 shown in Fig. 3), when the service function presentation region is therein presented with a search service component, after a search request triggered by using the search service component is received, a search result corresponding to a search character string in the search request is acquired and directly presented within the service function presentation region, which can meet the search requirement of the user by means of the service function presentation region.

Example 2: in a possible implementation, when the above "service function presentation region" includes a search service component, the above information presentation method may include at least the above S1 and the following 61. An execution time for the step 61 is later than the execution time for the S1.

Step 61: after the object service page is presented, in response to a search request triggered by using the search service component, switching from the object service page to a search result presentation page corresponding to a search character string in the search request, the search result presentation page being used for presenting the search result corresponding to the search character string.

In the present application, for the above "service function presentation region" (for example, the service function presentation region 203 shown in Fig. 3), when the service function presentation region is therein presented with a search service component, after a search request triggered by using the search service component is received, switching is performed directly from the above object service page (for example, the page 200 shown in Fig. 3) to a search result presentation page corresponding to the search character string, so that the search result presentation page is used for presenting a search result corresponding to the search character string, which can meet the search requirement of the user by means of page jumping.

Example 3, in a possible implementation, when the above "service function presentation region" includes a search service component, the above information presentation method may include at least the above S1 and the following 71-72. An execution time for the step 71 is later than the execution time for the S1.

Step 71: in response to a trigger operation for the search service component, switching from the object service page to a search service page. The search service page comprises a search service component.

The search service page is used for providing a search service to the user by means of a full-screen page; and the search service page includes a search service component. In addition, the present application does not limit an implementation of the search service page, for example, it may be implemented by using any existing or future page capable of providing a search service. Furthermore, the present application does not limit an implementation of the search service component present in the search service page either.

In addition, the present application does not limit an implementation of the "trigger operation for the above search service component" in the above step 71, for example, when the search service component includes a search word input box and a search triggering button, the "trigger operation for the above search service component" may specifically be: a click operation triggered for the search word input box.

Step 72: in response to a search request triggered by using the search service component in the search service page, switching from the search service page to a search result presentation page corresponding to a search character string in the search request, the search result presentation page being used for presenting a search result corresponding to the search character string.

Based on the related contents of the above steps 71 to 72, for the above "service function presentation region" (for example, the service function presentation region 203 shown in Fig. 3), when the service function presentation region is therein presented with a search service component, after a trigger operation (for example, a click operation triggered for a search word input box) for the search service component is detected, it is directly jumped from the above object service page to a search service page, so as to after a search request is triggered by using the search service component in the search service page, directly switch from the search service page to a search result presentation page corresponding to a search character string in the search request, so that the search result presentation page can present a search result corresponding to the search character string to the user, which can meet the search requirement of the user by means of page jumping many times.

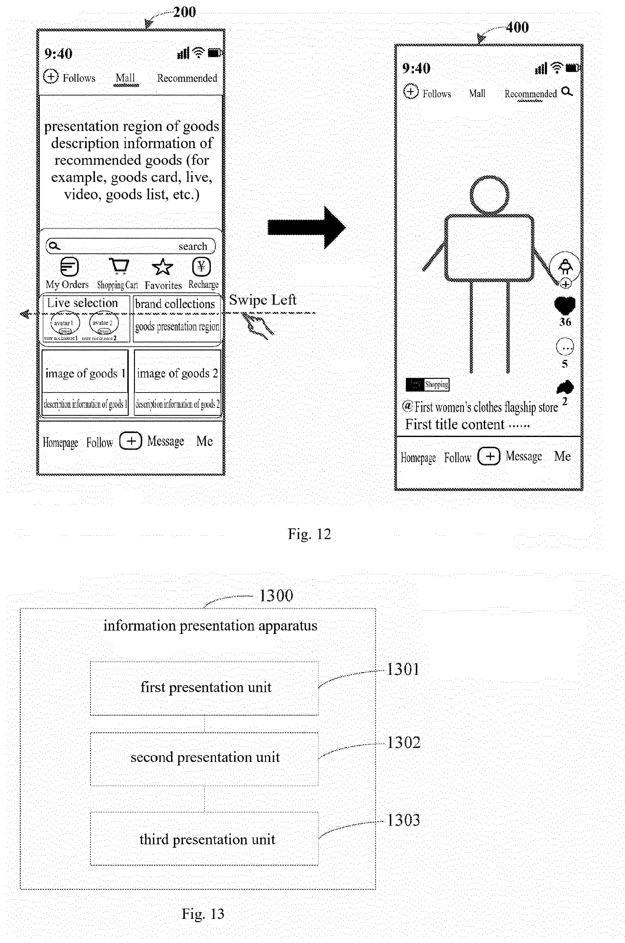

Case 3: in some application scenarios, after a swipe left or right operation is triggered within the above "service function presentation region", the current page (i.e., the above object service page) may be switched to a page corresponding to another page tag (for example, a "Recommended" page tag or "Follows" page tag shown in Fig. 12). For ease of understanding, the description is made below in conjunction with an example.

As an example, in a possible implementation, when the above object service page is thereon presented with a page switching region, the page switching region including several page tags, and each page tag corresponding to a different candidate page, the above information presentation method comprises at least the following steps 81 to 82.

Step 81: if the object service trigger operation is a selection operation for a page tag corresponding to the object service page, using the page tag corresponding to the object service page as a currently selected page tag, and presenting the object service page.

The page switching region is at least used for presenting several page tags. For example, the page switching region may be the page switching region 201 shown in Fig. 2; and the "several page tags" may include "Follows", "Mall", "Recommended", and other page tags. The page tag is used for identifying a page.

In addition, the present application does not limit a presentation position of the above "page switching region", for example, the presentation position of the page switching region is higher than the presentation position of the above "recommended-object presentation region", and the presentation position of the page switching region is adjacent to the presentation position of the recommended-object presentation region.

The above "page tag corresponding to the object service page" refers to a page tag having a correspondence with the object service page. For example, the "page tag corresponding to the object service page" may be the "Mall" page tag shown in Fig. 2.

In addition, the present application does not limit an implementation of the "selection operation" in the above step 81, for example, it may be implemented by using a "Swipe Right" operation shown in Fig. 4.

The above "currently selected page tag" refers to a page tag corresponding to a candidate page in a presentation state. In addition, in order to better highlight the "currently selected page tag", a presentation state of the "currently selected page tag" is different from a presentation state of another page tag than the "currently selected page tag" in the above "several page tags". For example, the presentation state of the "currently selected page tag" may be a highlighting state (for example, a presentation state of the "Mall" page tag in Fig. 2); and the presentation state of other page tags may be a non-highlighting state (for example, a presentation state of the "Follows" page tag in Fig. 2).

Step 82: in response to a third swipe operation triggered for the service function presentation region, determining a new currently selected page tag based on the third swipe operation, and switching the object service page to a candidate page corresponding to the new currently selected page tag.

The third swipe operation refers to an operation triggered within the above service function presentation region and used for swiping a page not presented to a page being presented; and the present application does not limit the third swipe operation, for example, when the above "several page tags" are presented in a horizontal arrangement in the above "page switching region", the third swipe operation may be a swipe left operation triggered within the service function presentation region (for example, a "Swipe Left" operation shown in Fig. 12), or a swipe right operation triggered within the service function presentation region.

The above "new currently selected page tag" refers to a page tag determined based on the above third swipe operation. For example, when the third swipe operation is the "Swipe Left" operation shown in Fig. 12, the "new currently selected page tag" may be the "Recommended" tab as shown in Fig. 12.

Based on the related contents of the above steps 81 to 82, for the above "service function presentation region", it is possible to switch from the above object service page to a candidate page corresponding to another page tag by means of the swipe left/right operation triggered within the service function presentation region, which can meet the page switching requirement of the user, and thus facilitates improving user experience.

Based on the information presentation method provided in the embodiment of the present application, an embodiment of the present application further provides an information presentation apparatus, which is explained and described below in conjunction with Fig. 13. Fig. 13 is a schematic structural diagram of an information presentation apparatus according to an embodiment of the present application. It should be noted that for the technical details of the information presentation apparatus provided in the embodiment of the present application, please refer to the related content of the above information presentation method.

As shown in Fig. 13, the information presentation apparatus 1300 provided in the embodiment of the present application comprises:
a first presentation unit 1301 configured to, in response to an object service trigger operation, present an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions;
a second presentation unit 1302 configured to, if a trigger operation for object recommendation information corresponding to a recommended object is detected, acquire a material type corresponding to the object recommendation information, and present a recommendation presentation page corresponding to the recommended object according to the material type corresponding to the object recommendation information; and
a third presentation unit 1303 configured to, if a trigger operation for a service entry to a service function is detected, present a service page corresponding to the service function.

In a possible implementation, the information presentation apparatus 1300 further comprises:
a fourth presentation unit configured to, in response to a first swipe operation triggered for the recommended-object presentation region, present a recommendation presentation page corresponding to a target object in the at least one recommended object.

In a possible implementation, the information presentation apparatus 1300 further comprises:
a first adjustment unit configured to, in response to a second swipe operation triggered for the service function presentation region, increase a presentation area of the service function presentation region, and hide the recommended-object presentation region; or
the information presentation apparatus 1300 further comprises:
   a second adjustment unit configured to, in response to a second swipe operation triggered for the service function presentation region, increase a presentation area of the service function presentation region; and
   a third adjustment unit configured to, when it is determined that the presentation area of the service function presentation region increases to a first area threshold, hide the recommended-object presentation region.

In a possible implementation, the information presentation apparatus 1300 further comprises:
a fourth adjustment unit configured to, when it is determined that the presentation area of the service function presentation region is increased to a second area threshold, cancel presenting service entries to several target functions within the service function presentation region, and add an entry management identification, wherein the several target functions are at least one of the plurality of service functions; and
a fifth presentation unit configured to, in response to a trigger operation for the entry management identification, present an entry aggregation page, the entry aggregation page comprising service entries to the several target functions.
In a possible implementation, the service function presentation region comprises a search service presentation region and a function identification aggregation region, the function identification aggregation region being adjacent to the search service presentation region, the search service presentation region being used for presenting a search service component, and the function identification aggregation region comprising the entry management identification; and the service function presentation region further comprises an object aggregation section, a presentation position of the object aggregation section being lower than that of the search service presentation region, and the presentation position of the object aggregation section being adjacent to that of the search service presentation region; and/or
the plurality of service functions comprise an object ordering service function, the object ordering service function not belonging to the several target functions, and a presentation position of a service entry to the object ordering service function being located within the function identification aggregation region.

In a possible implementation, the service function presentation region further comprises a search service component; and
the information presentation apparatus 1300 further comprises:
a sixth presentation unit configured to, in response to a search request triggered by using the search service component, present a search result corresponding to a search character string in the search request within the service function presentation region; or
after the presenting an object service page, the apparatus further comprises:
   a first switching unit configured to, in response to a search request triggered by using the search service component, switch from the object service page to a search result presentation page corresponding to a search character string in the search request, the search result presentation page being used for presenting a search result corresponding to the search character string; or
   after the presenting an object service page, the apparatus further comprises:
      a second switching unit configured to, in response to a trigger operation for the search service component, switch from the object service page to a search service page, the search service page comprising a search service component;
      a third switching unit configured to, in response to a search request triggered by using the search service component in the search service page, switch from the search service page to a search result presentation page corresponding to a search character string in the search request, the search result presentation page being used for presenting a search result corresponding to the search character string.

In a possible implementation, the object service page is thereon presented with a page switching region, wherein the page switching region comprises several page tags, each page tag corresponding to a different candidate page;
the first presentation unit 1301 is specifically configured to: if the object service trigger operation is a selection operation for a page tag corresponding to the object service page, use the page tag corresponding to the object service page as a currently selected page tag, and present the object service page; and
the information presentation apparatus 1300 further comprises:
   a fourth switching unit configured to, in response to a third swipe operation triggered for the service function presentation region, determine a new currently selected page tag based on the third swipe operation, and switch the object service page to a candidate page corresponding to the new currently selected page tag.

In a possible implementation, the recommended-object presentation region comprises object recommendation information corresponding to at least two recommended objects,
the object recommendation information corresponding to the at least two recommended objects in the recommended-object presentation region being presented in carousel presentation.

In a possible implementation, the information presentation apparatus 1300 further comprises:
a fifth switching unit configured to, in response to a fourth swipe operation triggered for the recommended-object presentation region, switching presentation of the object recommendation information corresponding to the recommended object within the recommended-object presentation region.

In a possible implementation, the material type is a detail information type, a video information stream type, or an object aggregation page type,
Wherein, if the material type corresponding to the object recommendation information is the detail information type, the recommendation presentation page corresponding to the recommended object is an object detail page corresponding to the recommended object;
if the material type corresponding to the object recommendation information is the video information stream type, the recommendation presentation page corresponding to the recommended object is a video presentation page corresponding to the recommended object; and
if the material type corresponding to the object recommendation information is the object aggregation page type, the recommendation presentation page corresponding to the recommended object is an object aggregation page corresponding to the recommended object.

Based on the related content of the information presentation apparatus 1300, for the information presentation apparatus 1300 provided in the embodiment of the present application, after the information presentation apparatus 1300 receives an object service trigger operation, an object service page is presented, and the object service page comprises a recommended-object presentation region and a service function presentation region, so that the recommended-object presentation region is used for presenting object recommendation information (for example, a goods card, live video, etc.) corresponding to at least one recommended object, and the service function presentation region is used for presenting service entries to a plurality of service functions, so as to after a trigger operation for object recommendation information corresponding to any recommended object is detected, acquire a material type corresponding to the object recommendation information, and present a recommendation presentation page corresponding to the recommended object according to the material type corresponding to the object recommendation information, so that the recommendation presentation page can better introduce the related information of the recommended object; or, after a trigger operation for a service entry to any service function is detected, present a service page corresponding to the service function, so that the service page can better provide a corresponding service to a user.

It can be seen that, for the object service page comprising the recommended-object presentation region and the service function presentation region according to the present application, the recommended-object presentation region can be used for presenting object recommendation information corresponding to some recommended objects, so that the recommended-object presentation region can, to a user, directly introduce some objects which he may be interested in, and thus, the user can directly view the information by means of the recommended-object presentation region, which facilitates improving viewing experience of the user for these objects; and the service function presentation region can be used for presenting service entries to some service functions, so that the service function presentation region can directly provide these service functions to the user, which also facilitates improving use experience of the user for these service functions.

In addition, an embodiment of the present application further provides an electronic device, comprising a processor and a memory, the memory being configured to store instructions or a computer program, and the processor being configured to execute the instructions or computer program in the memory, so that the electronic device performs any implementation of the information presentation method according to the embodiment of the present application.

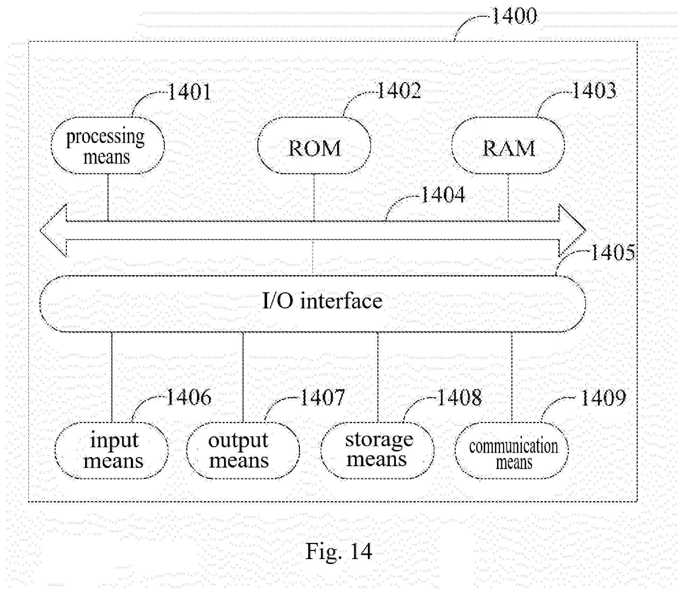

Refer to Fig. 14, which illustrates a schematic structural diagram of an electronic device 1400 suitable for implementing an embodiment of the present disclosure. The terminal device in the embodiment of the present disclosure may include, but does not limit, a mobile terminal such as a mobile phone, a laptop, a digital broadcast receiver, a PDA (Personal Digital Assistant), a PAD (tablet), a PMP (Portable Multimedia Player), and a vehicle-mounted terminal (for example, a vehicle-mounted navigation terminal), and a fixed terminal such as a digital TV, and a desktop. The electronic device shown in Fig. 14 is only an example, and should not bring any limitation to the functions and the scope of use of the embodiments of the present disclosure.

As shown in Fig. 14, the electronic device 1400 may comprise a processing means (for example, a central processing unit, graphics processing unit, etc.) 1401 that can perform various appropriate actions and processes according to a program stored in a read-only memory (ROM) 1402 or a program loaded from a storage means 1408 into a random access memory (RAM) 1403. In the RAM 1403, various programs and data necessary for the operation of the electronic device 1400 are also stored. The processing means 1401, ROM 1402, and RAM 1403 are connected to each other by a bus 1404. An input/output (I/O) interface 1405 is also connected to the bus 1404.

Generally, the following means may be connected to the I/O interface 1405: an input means 1406 including, for example, a touch screen, touch pad, keyboard, mouse, camera, microphone, accelerometer, gyroscope, etc.; an output means 1407 including, for example, a liquid crystal display (LCD), a speaker, a vibrator, etc.; the storage means 1408 including, for example, a magnetic tape, hard disk, etc.; and a communication means 1409. The communication means 1409 may allow the electronic device 1400 to communicate wirelessly or by wire with other devices to exchange data. While Fig. 14 illustrates the electronic device 1400 having various means, it should be understood that there is no requirement that all the illustrated means are implemented or provided. More or fewer devices may be alternatively implemented or provided.

In particular, according to the embodiment of the present disclosure, the processes described above with reference to the flow diagrams may be implemented as a computer software program. For example, an embodiment of the present disclosure comprises a computer program product comprising a computer program carried on a non-transitory computer-readable medium, the computer program containing program code for performing the method illustrated by the flow diagrams. In such an embodiment, the computer program may be downloaded and installed from a network via the communications means 1409, or installed from the storage means 1408, or installed from the ROM 1402. The computer program, when executed by the processing means 1401, performs the above functions defined in the method according to the embodiment of the present disclosure.

The electronic device provided in the embodiment of the present disclosure and the method provided in the above embodiment belong to the same inventive concept, and for technical details that are not described in detail in this embodiment, reference can be made to the above embodiment, and this embodiment has the same beneficial effects as the above embodiment.

An embodiment of the present application further provides a computer-readable medium having therein stored an instruction or computer program which, when running on a device, causes the device to perform any implementation of the information presentation method according to the embodiment of the present application.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency), etc., or any suitable combination of the foregoing.

In some implementations, a client and a server may communicate using any currently known or future developed network protocol, such as HTTP (Hyper Text Transfer Protocol), and may be interconnected with any form or medium of digital data communication (e.g., a communication network). Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be contained in the above electronic device; or may exist separately without being assembled into the electronic device.

The above computer-readable medium has thereon carried one or more programs which, when executed by the electronic device, enables the electronic device to perform the method.

Computer program code for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved units described in the embodiments of the present disclosure may be implemented by software or hardware. The name of the unit/module does not, in some cases, constitute a limitation on the unit itself.

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard parts (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

It should be noted that, in this description, the embodiments are described in a progressive manner, and each embodiment focuses on differences from other embodiments, and for same and similar parts among the embodiments, reference can be made to each other. For the system or apparatus disclosed by the embodiment, the description is simple since it corresponds to the method disclosed by the embodiment, so that for the relevant points, reference can be made to the description of the method section.

It should be understood that, in the present application, "at least one" refers to one or more, "a plurality" refers to two or more. "And/or", which is used for describing an association between associated objects, indicates that there may be three relationships, for example, "A and/or B" may represent three cases: the presence of A alone, the presence of B alone, and the presence of A and B simultaneously, wherein A and B may be singular or plural. A character "/" generally indicates that preceding and succeeding objects associated are in an "or" relationship. "At least one of the following items" or its similar expression refers to any combination of these items, including any combination of the singular or plural items. For example, at least one of a, b, or c, may represent: a, b, c, "a and b", "a and c", "b and c", or "a and b and c", where a, b and c may be single or plural.

It should further noted that, relational terms such as "first" and "second", herein, are only used for distinguishing one entity or operation from another entity or operation without necessarily requiring or implying any such actual relation or order between these entities or operations. Moreover, the term "comprise", "include", or any other variation thereof, is intended to encompass a non-exclusive inclusion, such that a process, method, article, or device comprising a list of elements not only includes those elements but also includes other elements not expressly listed, or also includes elements inherent to such a process, method, article, or device. Without more limitations, an element defined by a statement "comprising a ... " does not exclude the presence of another identical element in a process, method, article, or device that includes the element.

The steps of the method or algorithm described in conjunction with the embodiments disclosed herein may be directly implemented using hardware, a software module executed by a processor, or a combination of the two. The software module may be provided in a random access memory (RAM), memory, read-only memory (ROM), electrically programmable ROM, electrically erasable programmable ROM, register, hard disk, removable disk, CD-ROM, or any other form of storage medium known in the art.

The above description of the disclosed embodiments enables those skilled in the art to implement or use the present application. Various modifications to these embodiments will be readily apparent to those skilled in the art, and the general principles defined herein may be implemented in other embodiments without departing from the spirit or scope of the present application. Therefore, the present application is not intended to be limited to these embodiments shown herein but to conform to the widest scope consistent with the principles and novel features disclosed herein.

## Claims

1. An information presentation method, comprising:
in response to an object service trigger operation, presenting an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions;
in response that a trigger operation for object recommendation information corresponding to a recommended object is detected, acquiring a material type corresponding to the object recommendation information, and presenting a recommendation presentation page corresponding to the recommended object according to the material type corresponding to the object recommendation information; and
in response that a trigger operation for a service entry to a service function is detected, presenting a service page corresponding to the service function.

2. The method according to claim 1, further comprising:
in response to a first swipe operation triggered for the recommended-object presentation region, presenting a recommendation presentation page corresponding to a target object in the at least one recommended object.

3. The method according to claim 1, further comprising:
in response to a second swipe operation triggered for the service function presentation region, increasing a presentation area of the service function presentation region, and hiding the recommended-object presentation region; or
further comprising:
in response to a second swipe operation triggered for the service function presentation region, increasing a presentation area of the service function presentation region; and
in response that it is determined that the presentation area of the service function presentation region is increased to a first area threshold, hiding the recommended-object presentation region.

4. The method according to claim 3, further comprising:
in response that it is determined that the presentation area of the service function presentation region is increased to a second area threshold, canceling presenting service entries to several target functions within the service function presentation region, and adding an entry management identification, wherein the several target functions are at least one of the plurality of service functions; and
in response to a trigger operation for the entry management identification, presenting an entry aggregation page, the entry aggregation page comprising the service entries to the several target functions.

5. The method according to claim 4, wherein the service function presentation region comprises a search service presentation region and a function identification aggregation region, the function identification aggregation region being adjacent to the search service presentation region, the search service presentation region being used for presenting a search service component, and the function identification aggregation region comprising the entry management identification.

6. The method according to claim 5, wherein the service function presentation region further comprises an object aggregation section, a presentation position of the object aggregation section being lower than that of the search service presentation region, the presentation position of the object syndication section being adjacent to that of the search service presentation region.

7. The method according to claim 4, wherein the plurality of service functions comprise an object ordering service function, the object ordering service function not belonging to the several target functions, and a presentation position of a service entry to the object ordering service function being located within the function identification aggregation region.

8. The method according to claim 1, wherein the service function presentation region further comprises the search service component; and
after the presenting an object service page, the method further comprises:
in response to a search request triggered by using the search service component, presenting a search result corresponding to a search character string in the search request within the service function presentation region;
or
after the presenting an object service page, the method further comprises:
in response to a search request triggered by using the search service component, switching from the object service page to a search result presentation page corresponding to a search character string in the search request, the search result presentation page being used for presenting a search result corresponding to the search character string;
or
after the presenting an object service page, the method further comprises:
in response to a trigger operation for the search service component, switching from the object service page to a search service page, the search service page comprising a search service component; and
in response to a search request triggered by using the search service component in the search service page, switching from the search service page to a search result presentation page corresponding to a search character string in the search request, the search result presentation page being used for presenting a search result corresponding to the search character string.

9. The method according to claim 1, wherein the object service page is thereon presented with a page switching region, wherein the page switching region comprises several page tags, each page tag corresponding to a different candidate page;
Wherein in response to an object service trigger operation presenting an object service page, comprises:
in response that the object service trigger operation is a selection operation for a page tag corresponding to the object service page, using the page tag corresponding to the object service page as a currently selected page tag, and presenting the object service page; and
after the presenting an object service page, the method further comprises:
in response to a third swipe operation triggered for the service function presentation region, determining a new currently selected page tag based on the third swipe operation, and switching the object service page to a candidate page corresponding to the new currently selected page tag.

10. The method according to claim 1, wherein the recommended-object presentation region comprises object recommendation information corresponding to at least two recommended objects,
the object recommendation information corresponding to the at least two recommended objects in the recommended-object presentation region being presented in carousel presentation;
and/or
after the presenting an object service page, the method further comprises:
in response to a fourth swipe operation triggered for the recommended-object presentation region, switching presentation of the object recommendation information corresponding to the recommended object within the recommended-object presentation region.

11. The method according to claim 1, wherein the material type is a detail information type, a video information stream type, or an object aggregation page type,
wherein, in response that the material type corresponding to the object recommendation information is the detail information type, the recommendation presentation page corresponding to the recommended object is an object detail page corresponding to the recommended object;
in response that the material type corresponding to the object recommendation information is the video information stream type, the recommendation presentation page corresponding to the recommended object is a video presentation page corresponding to the recommended object; and
in response that the material type corresponding to the object recommendation information is the object aggregation page type, the recommendation presentation page corresponding to the recommended object is an object aggregation page corresponding to the recommended object.

12. An information presentation apparatus, comprising:
a first presentation unit configured to, in response to an object service trigger operation, present an object service page, wherein the object service page comprises a recommended-object presentation region and a service function presentation region, the recommended-object presentation region being used for presenting object recommendation information corresponding to at least one recommended object, and the service function presentation region being used for presenting service entries to a plurality of service functions;
a second presentation unit configured to, in response that a trigger operation for object recommendation information corresponding to a recommended object is detected, acquire a material type corresponding to the object recommendation information, and present a recommendation presentation page corresponding to the recommended object according to the material type corresponding to the object recommendation information; and
a third presentation unit configured to, in response that a trigger operation for a service entry to a service function is detected, present a service page corresponding to the service function.

13. An electronic device, comprising: a processor and a memory,
the memory being configured to store instructions or a computer program, and
the processor being configured to execute the instructions or computer program in the memory to cause the electronic device to perform the method according to any of claims 1-11.

14. A computer-readable medium having therein stored instructions or a computer program which, when running on a device, causes the device to perform the method according to any of claims 1-11.

15. A computer program product, comprising a computer program which, when executed by a processor, implements the method according to any of claims 1-11.
